# EUROPEAN PATENT SPECIFICATION

(11) **EP 3 762 617 B1**
(45) Date of publication and mention of the grant of the patent: **07.06.2023**
(21) Application number: 19714789.5
(22) Date of filing: 04.03.2019
(51) Int. Cl.: F15B 13/08, F16K 27/00

(54) **HYDRAULIC DISTRIBUTOR**
HYDRAULISCHER VERTEILER
DISTRIBUTEUR HYDRAULIQUE

(30) Priority: 05.03.2018 IT 201800003266
(43) Date of publication of application: 13.01.2021
(73) Proprietor: Oilcomp S.r.l., 41123 Modena (IT)
(72) Inventor: BELLOTTI, Marco, 41123 Modena (IT)
(74) Representative: Zoli, Filippo
(86) International application number: PCT/IB2019/051726
(87) International publication number: WO 2019/171248

(56) References cited:
- EP-A1- 0 959 280
- EP-A2- 2 770 217
- WO-A1-2008/116481
- US-A- 2 651 324
- US-A- 3 111 139
- US-A- 3 215 158
- US-A1- 2003 056 840
- US-A1- 2003 116 208

## Description

### Technical Field

The present invention relates to a hydraulic distributor.

### Background Art

As is well known, hydraulic distributors are generally used to convey a work fluid under pressure, such as air, water or oil, to a plurality of user points, such as e.g. hydraulic cylinders.

For example, hydraulic distributors are used in agricultural machinery, in aerial vessels, in forklift trucks or in operating machinery, such as earthmoving machinery.

Hydraulic distributors generally comprise a supply channel for a work fluid under pressure, which can be connected to a source of the work fluid such as a pump or the like, a discharge channel, which can be connected to a discharge tank, a first and a second command line which can be connected to a user point, for example which can be connected to the opposed chambers of a hydraulic cylinder, valve means placed between the supply and discharge channels and the command lines and which can be operated to regulate the flow of work fluid towards the user points. There are also activation means for activating the valve means, e.g. of the electric type.

Today there are several types of hydraulic distributors, some of which, called "monoblock", are designed and manufactured in a single body piece according to the specific needs of the case, or depending on the functions required and depending on the overall dimensions available.

These monoblock distributors, however, have the drawback of being very expensive, due in particular to the fact that the design and construction are linked to the specific needs of the case, so their use is not very flexible. For the same reason it is also complicated to manage the warehouse stocks.

An alternative to monoblock distributors are the so-called "modular" distributors, i.e. distributors made up of a plurality of separate modules that can be assembled according to the needs of the case.

The modular distributors are particularly adapted for small to medium fluid flow rates, such as in the case of agricultural machines or aerial vessels.

Each of these modules defines a length of the supply channel and of the discharge channel, has relative command lines that can be connected to a corresponding user point, relative valve means and activation means.

These modular distributors do have some drawbacks, although they are characterized by a wide flexibility of use, because they combine the various modules to each other so that various final configurations can be obtained.

In particular, their mutual fixing is complicated, since the number of modules used, and therefore the overall dimensions of the distributor, may vary from time to time depending on the specific needs of the case.

To date, one known solution for the mutual fixing of the various modules used is to make threaded parts that pass through all the modules used, tightening them together.

This, however, requires the realization of various types and sizes of threaded members, with a consequent increase in the manufacturing costs and in the complexity of the management of the warehouse stocks.

Another drawback of the modular distributors consists in the difficulty of avoiding leakage of the work fluid between one module and another.

Documents US 3215158A, US 3111139A, WO 2008/116481, US 2003/056840A1, EP 0959280A1, EP 2770217A2, US 2003/116208A1, describe some modular distributors of known type with which external valve means are associated which are necessary to divert the flow of the work fluid towards the relative user points. Document US2651324 disclose a hydraulic distributor according to the preamble of claim 1.

### Description of the Invention

The main aim of the present invention is to devise a hydraulic distributor of the modular type that is not only easy to design, but also easy to assemble, regardless of its sizes and functions.

Within this aim, one object of the present invention is to devise a hydraulic distributor that allows reducing, compared to the devices of known type, the components necessary for the production thereof.

Another object of the present invention is to optimize, from the hydraulic point of view, the path of the work fluid in the passage between the various modules. Still another object is to facilitate the management of the warehouse stocks.

A further object of the present invention is to minimize the risk of leakage between adjacent modules.

Another object of the present invention is to devise a hydraulic distributor that allows overcoming the aforementioned drawbacks of the prior art in a simple, rational, easy, effective to use and low-cost solution.

The aforementioned objects are achieved by the present hydraulic distributor according to claim 1.

### Brief Description of the Drawings

Other characteristics and advantages of the present invention will be more evident from the description of a preferred, but not exclusive, embodiment of a hydraulic distributor, illustrated by way of an indicative, but non-limiting example, in the attached tables of drawings in which:

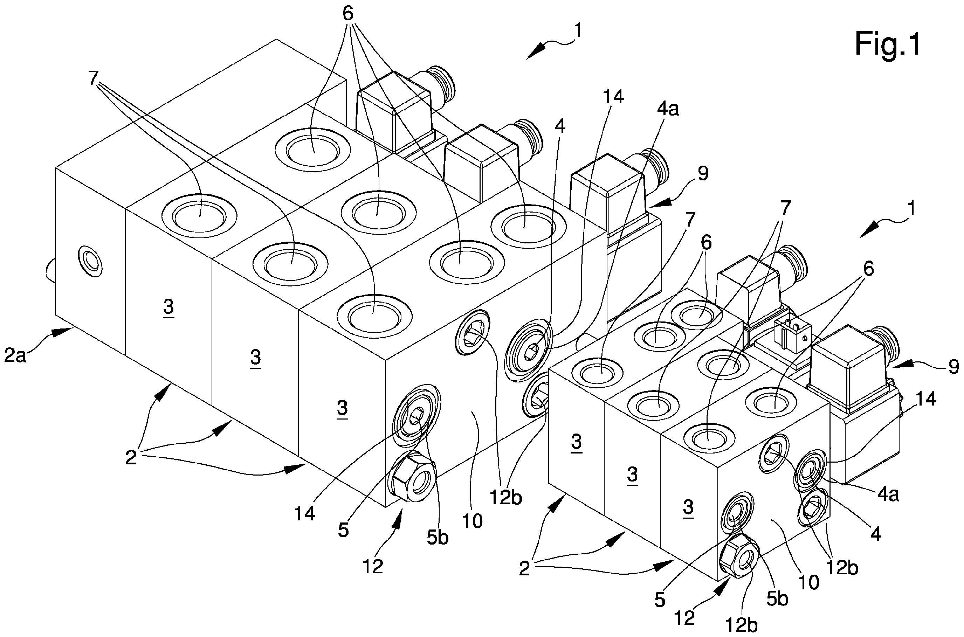

Figure 1 is an axonometric view of a series of modules of hydraulic distributors according to the invention;
Figure 2 is a side elevation view of the modules in Figure 1;
Figure 3 is a cross-sectional view of the modules in Figure 2 along the trace plane III-III;

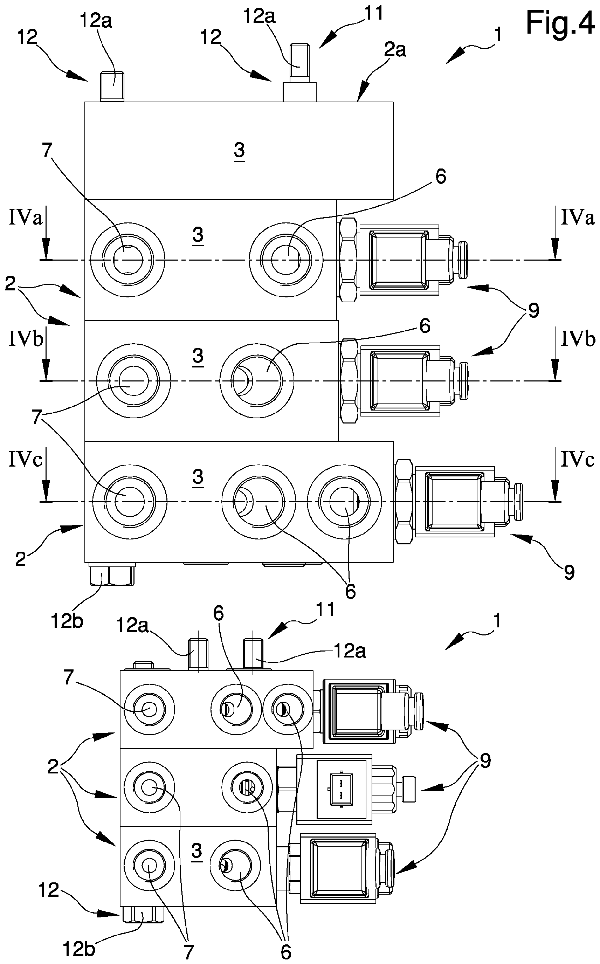

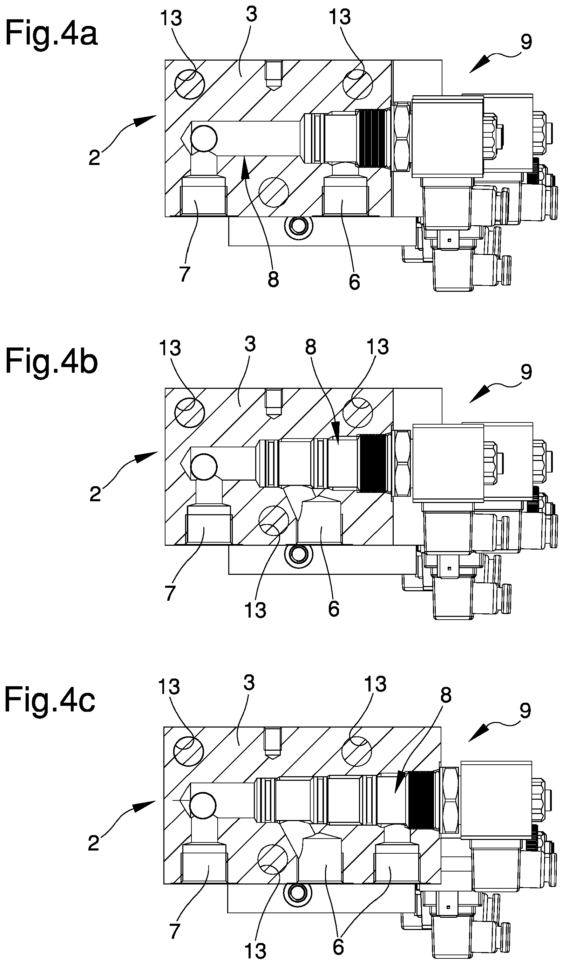

Figure 4 is a plan view from above of the modules in Figure 1;
Figures 4a to 4c are cross-sectional views of some of the modules in Figure 4 according to the IVa-IVa, IVb-IVb and IVc-IVc trace planes;

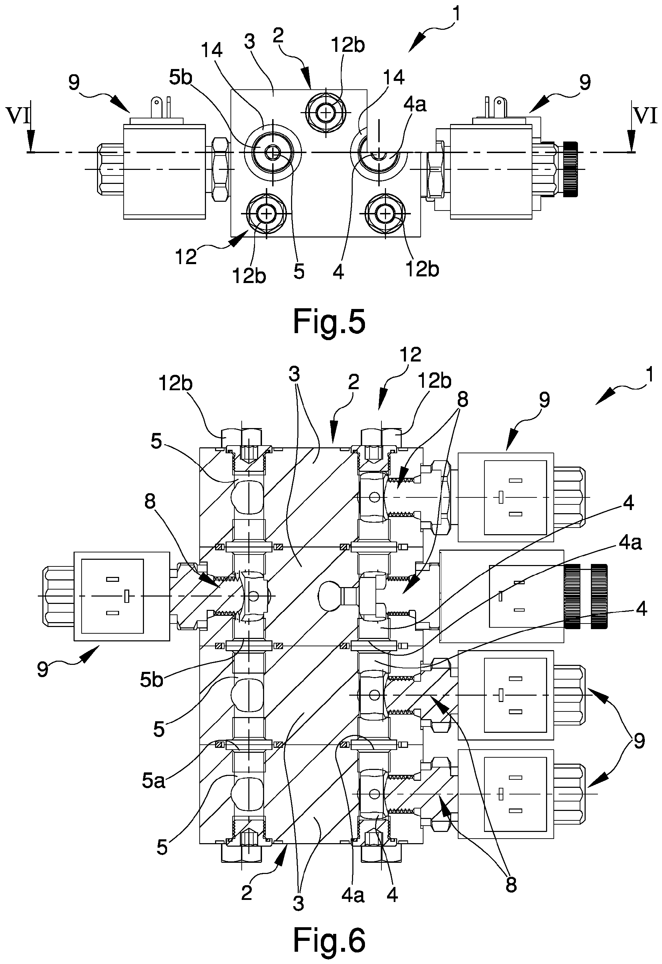

Figure 5 is a side elevation view of a distributor according to the invention;
Figure 6 is a cross-sectional view of the distributor in Figure 5 along the trace plane VI-VI.

### Embodiments of the Invention

With particular reference to these illustrations, reference numeral 1 globally indicates a hydraulic distributor.

The distributor 1 comprises a plurality of modules, identified in the figures with reference numeral 2, which are connected to each other in a removable manner. The modules 2 can therefore be assembled together depending on the available overall dimensions and the required functions.

Each module 2 comprises a relative body 3 provided with at least one supply channel 4 connectable to a source of a work fluid under pressure, such as a pump or the like, at least one discharge channel 5 connectable to a discharge tank and at least a first and a second command lines 6 and 7 connectable to a relative user point, such as e.g. a hydraulic cylinder.

According to the invention, inside the body 3 of each module 2, valve means 8 are housed which are positioned between the supply and discharge channels 4 and 5 and the command lines 6 and 7, where the valve means 8 are operable, by means of activation means 9, to regulate the flow of the work fluid towards the command lines themselves. The valve means 8 are suitably inserted in a removable manner inside the body 3 of the relative module 2.

The distributor 1 comprises an end module 2a, which is associated with only one module 2 and which has a connecting channel, not visible in detail in the illustrations, adapted to place the supply channels 4 of the various modules 2 in communication with the relative discharge channels 5.

The body 3 of each module 2 defines at least one coupling surface 10 adapted to rest against the coupling surface 10 of the adjacent module 2. Each body 3 has two coupling surfaces 10 opposing each other, adapted to lean against the front module 2 and against the rear module 2, respectively. On the coupling surfaces 10 face the supply channel 4 and the discharge channel 5 of the relative module 2, thus defining relative inlet ports 4a, 5a of the work fluid inside the relative module 2 and relative outlet ports 4b, 5b of the work fluid from the relative module 2. More specifically, the supply channel 4 defined in each module 2 has a relative inlet port 4a and a relative outlet port 4b of the work fluid, which are arranged facing each other and facing the relative coupling surfaces 10. Similarly, the discharge channel 5 defined in each module 2 has a relative inlet port 5a and a relative outlet port 5b of the work fluid, which are arranged facing each other and facing the relative coupling surfaces 10.

The valve means 8 are then housed inside the body 3 of the relative module 2 and are positioned between the inlet port 4a, 5a and the outlet port 4b, 5b of at least one of the relative supply channel 4 and the relative discharge channel 5. The distributor 1 then comprises mutual connecting means 11 of the various modules 2.

More specifically, the connecting means 11 comprise, for each module 2, at least one threaded element 12 which engages in a removable manner with the threaded elements 12 of the adjacent modules 2 for the mutual fixing thereof.

By means of the mutual engagement of the threaded element 12 of a module 2 with the threaded element 12 of the adjacent module 2, it is therefore possible to fix the various modules 2 to each other.

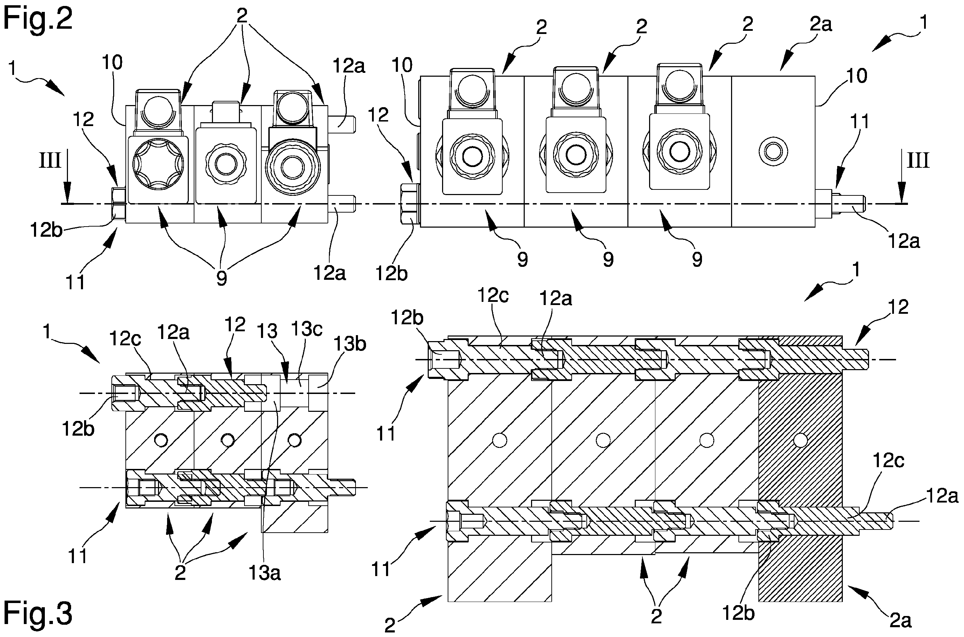

Advantageously, as shown in Figure 3, each threaded element 12 has at least one externally threaded end 12a and at least one internally threaded hollow head 12b. The end 12a of the threaded element 12 of one of the modules 2 engages with the hollow head 12b of the threaded element 12 of the adjacent module 2. In the embodiment shown in the illustrations, the threaded elements 12 also comprise one stem 12c, positioned between the relative end 12a and the relative head 12b, where the stem 12c, the head 12b and the end 12a have diameters different to each other.

Each module 2 is then fixed to the adjacent modules 2 by means of the threaded elements 12.

Preferably, a plurality of threaded elements 12 is provided for each module 2. In particular, there are three threaded elements 12 for each module 2, which are arranged to define the vertices of a triangle, so as to evenly distribute the tightening torques.

More in detail, each threaded element 12 is inserted into a relative through hole 13 defined on the body 3 of the relative module 2. The hole 13 faces the coupling surfaces 10 of the relative module 2.

The holes 13 of each module 2 are separate from both the relative supply channel 4 and the relative discharge channel 5.

In the embodiment shown in the illustrations, the holes 13 extend substantially parallel to at least one of the supply channel 4 and the discharge channel 5 of the relative module 2.

Appropriately, the holes 13 have at least one recess 13a for at least partly housing the head 12b of the relative threaded element 12. More particularly, as can be seen from the sections of Figure 3, the head 12b of the threaded element 12 of a module 2 can be completely contained within the relative recess 13a, and therefore be substantially aligned with the relative coupling surface 10 of the module itself.

Alternatively, the head 12b of the threaded element 12 can be partly contained inside the relative recess 13a, therefore partly protruding from the relative coupling surface 10 of the module 2. In this case, the holes 13 comprise at least a first recess 13a for the housing of the head 12b of the relative threaded element 12 and at least a second recess 13b, which is opposed to the first recess 13a, for the housing of the head 12b of the threaded element 12 of the adjacent module 2, so that the coupling surfaces 10 of the bodies 3 of the adjacent modules are arranged to rest against each other following the tightening of the threaded elements 12. The first and the second recesses 13a and 13b suitably have the same diameter, larger than the diameter of the intermediate portion 13c of the hole 13 placed between the recesses 13a and 13b.

Between the coupling surfaces 10 of two adjacent modules 2, at the supply and discharge channels 4 and 5, sealing means are interposed, e.g. of the O-ring type, not visible in detail in the illustrations, adapted to prevent leakage to the outside of the work fluid.

Each of the coupling surfaces 10 has a relative seat 14 for the housing of the sealing means; the seats 14 defined on the coupling surfaces 10 facing each other are substantially aligned with each other so that the sealing means are partly housed inside each of them. The body 3 of two adjacent modules 2 has a seat 14 defined at the outlet port 4b, 5b of one of the two modules 2 and a seat 14 defined at the inlet port 4a, 5a of the adjacent module 2 and with which the outlet port 4b, 5b is placed in communication.

This allows optimizing the sealing function between two adjacent modules 2 and at the same time facilitating the management of the warehouse stocks, since the bodies 3 of the various modules 2 have the same characteristics. Moreover, the presence of the seat 14 defined on each coupling surface 10 allows the relative module 2 to be rotated by 180° according to needs, maintaining the seal with the adjacent module 2 unchanged, thus allowing a wide flexibility of use.

The operation of the present invention is as follows.

The distributor 1 is assembled by connecting the various modules 2 to each other.

In particular, the distributor 1 is assembled by choosing the modules 2 which are suitable for the performance of the desired functions, where the modules 2 are in turn assembled by inserting the appropriate valve means 8 into the relative bodies 3.

The assembly of the distributor 1 is carried out by inserting the threaded elements 12 into the holes 13 of each module 2 and by engaging the threaded elements 12 of each module 2 with the threaded elements 12 of the adjacent module 2.

In particular, the end 12a of each threaded element 12 is inserted into the head 12b of the threaded element 12 of the adjacent module 2. By tightening the threaded elements 12, the adjacent modules 2 are compacted together, bringing them to a "pack" configuration. The tightening force is discharged onto the coupling surfaces 10, so that the opposed coupling surfaces 10 of each module 2 are subjected to opposing and substantially equivalent forces.

Each module 2 is then associated with the adjacent module 2, starting with the end module 2a.

Appropriately, before tightening the threaded elements 12 together, the sealing means are positioned between the coupling surfaces 10 of two adjacent modules 2, at the relative seats 14.

It has in practice been found that the described invention achieves the intended objects and, in particular, the fact has been pointed out that the distributor, which the present invention relates to, can be easily assembled by means of the threaded elements associated with each module, which in no way alter the fluid dynamics of the distributor himself and at the same time allow optimizing the warehouse stocks.

In particular, the fact that the threaded elements are inserted into the relative holes separate from the supply and discharge channels allows the fluid dynamics of the modules to be maintained unchanged and the threaded elements themselves to be sized at will.

The solution, which the present invention relates to, also allows standardizing both the modules and the threaded elements, allowing a high flexibility of design and an easy management of the warehouse stocks.

## Claims

1. Hydraulic distributor (1) comprising:
- a plurality of modules (2) connected to each other in a removable manner, where each of said modules (2) comprises a relative body (3) provided with: at least one supply channel (4) connectable to a supply source of a work fluid under pressure, at least one discharge channel (5) connectable to a discharge tank, at least a first and a second command line (6, 7) connectable to a relative user point (C), valve means (8) operable to regulate the flow of the work fluid towards said command lines (6, 7), activation means (9) for activating said valve means (8), where the body (3) of each of said modules (2) defines two coupling surfaces (10) opposing each other, each one of which is adapted to lean against a coupling surface (10) of an adjacent module (2), said supply channel (4) and said discharge channel (5) each facing said coupling surfaces (10) and defining a relative inlet port (4a, 5a) and a relative outlet port (4b, 5b) of the work fluid, where said inlet ports (4a, 5a) are arranged facing the relative outlet ports (4b, 5b) and face the relative coupling surfaces (10);
- sealing means positioned between the coupling surfaces (10) of two of said modules (2) adjacent to each other, at said supply and discharge channels (4, 5), where onto at least one of the coupling surfaces (10) of two modules (2) adjacent to each other, is defined a relative seat (14) for the housing of said sealing means, where said seat (14) is arranged around said inlet ports (4a, 5a) and/or said outlet ports (4b, 5b);
- mutual connecting means (11) of said modules (2) which comprise, for each of said modules (2), at least one threaded element (12) which engages in a removable manner with the threaded elements (12) of the adjacent modules (2) for their mutual fixing, where said at least one threaded element (12) is inserted into a relative through hole (13) defined on the body (3) of the relative module (2) and where said hole (13) is separate from said supply channel (4) and from said discharge channel (5), and
where said threaded elements are separate from said supply and discharge channels (4, 5);
where said valve means (8) are contained inside the relative body (3) of each of said modules (2) and are positioned between said supply and discharge channels (4, 5) and said command lines (6, 7);
**characterized by** the fact that each of said coupling surfaces (10) has a relative seat (14) for the housing of said sealing means, the seats (14) defined on the coupling surfaces (10) facing each other of two of said adjacent modules (2) being substantially aligned with each other.

2. Distributor (1) according to claim 1, **characterized by** the fact that said valve means (8) are inserted in a removable manner inside said body (3) of the relative module (2).

3. Distributor (1) according to one or more of the preceding claims, **characterized by** the fact that said valve means (8) are positioned between the inlet port (4a, 5a) and the outlet port (4b, 5b) of at least one of the supply channel (4) and the discharge channel (5) of each of said modules (2).

4. Distributor (1) according to one or more of the preceding claims, **characterized by** the fact that said threaded element (12) has at least one externally threaded end (12a) and at least one internally threaded hollow head (12b), the end (12a) of the threaded element (12) of one of said modules (2) engaging with the hollow head (12b) of the threaded element (12) of the adjacent module (2).

5. Distributor (1) according to one or more of the preceding claims, **characterized by** the fact that it comprises a plurality of said threaded elements (12) for each of said modules (2).

6. Distributor (1) according to claim 5, **characterized by** the fact that it comprises three of said threaded elements (12) for each of said modules (2) which are arranged to define the vertices of a triangle.

7. Distributor (1) according to one or more of the preceding claims, **characterized by** the fact that said hole (13) faces onto said coupling surfaces (10).

8. Distributor (1) according to one or more of preceding claims, **characterized by** the fact that said hole (13) comprises at least one recess (13a) for at least partly housing the head of said threaded element (12).

9. Distributor (1) according to claim 8, **characterized by** the fact that said hole (13) comprises at least a first recess (13a) for the housing of the head (12b) of the relative threaded element (12) and at least a second recess (13b), which is opposed to said first recess (13a), for the housing of the head (12b) of the threaded element (12) of the adjacent module (2).

10. Distributor (1) according to one or more of claims 4 to 9, **characterized by** the fact that said threaded element (12) comprises at least one stem (12c), positioned between said end (12a) and said head (12b), where said head (12b), said stem (12c) and said end (12a) have diameters different to each other.

## Patentansprüche

1. Hydraulischer Verteiler (1), aufweisend:
- eine Vielzahl von Modulen (2), die lösbar miteinander verbunden sind, wobei jedes der Module (2) einen entsprechenden Körper (3) aufweist, der aufweist: mindestens einen Versorgungskanal (4), der mit einer Versorgungsquelle für ein unter Druck stehendes Arbeitsfluid verbunden werden kann, mindestens einen Auslasskanal (5), der mit einem Auslasstank verbunden werden kann, mindestens eine erste und eine zweite Steuerleitung (6, 7), die mit einem entsprechenden Verwenderpunkt (C) verbunden werden können, Ventilmittel (8), die betätigt werden können, um den Fluss des Arbeitsfluids zu den Steuerleitungen (6, 7) zu regulieren, Aktivierungsmittel (9) zum Aktivieren der Ventilmittel (8), wobei der Körper (3) jedes der Module (2) zwei einander gegenüberliegende Kopplungsflächen (10) definiert, von denen jede dazu ausgebildet ist, sich gegen eine Kopplungsfläche (10) eines benachbarten Moduls (2) zu lehnen, wobei der Zufuhrkanal (4) und der Abfuhrkanal (5) jeweils den Kopplungsflächen (10) zugewandt sind und eine entsprechende Einlassöffnung (4a, 5a) und eine entsprechende Auslassöffnung (4b, 5b) für das Arbeitsfluid definieren, wobei die Einlassöffnungen (4a, 5a) den entsprechenden Auslassöffnungen (4b, 5b) und den entsprechenden Kopplungsflächen (10) zugewandt sind,
- Dichtungsmittel, die zwischen den Kopplungsflächen (10) zweier der Module (2), die einander benachbart sind, an den Zufuhr- und Auslasskanälen (4, 5) positioniert sind, wobei auf mindestens einer der Kopplungsflächen (10) von zwei Modulen (2), die einander benachbart sind, ein entsprechender Sitz (14) zur Aufnahme der Dichtungsmittel definiert ist, wobei der Sitz (14) um die Einlassöffnungen (4a, 5a) und/oder die Auslassöffnungen (4b, 5b) herum angeordnet ist;
- gegenseitige Verbindungsmittel (11) der Module (2), die für jedes der Module (2) mindestens ein Gewindeelement (12) umfassen, das in einer lösbaren Weise mit den Gewindeelementen (12) der benachbarten Module (2) zu deren gegenseitiger Befestigung in Eingriff steht, wobei das mindestens eine Gewindeelement (12) in ein entsprechendes Durchgangsloch (13) eingesetzt ist, das an dem Körper (3) des entsprechenden Moduls (2) definiert ist, und wobei das Loch (13) von dem Zufuhrkanal (4) und von dem Auslasskanal (5) getrennt ist, und wobei die Gewindeelemente von den Zufuhr- und Auslasskanälen (4, 5) getrennt sind,
wobei die Ventilmittel (8) im Inneren des entsprechenden Körpers (3) jedes der Module (2) untergebracht sind und zwischen den Zufuhr- und Auslasskanälen (4, 5) und den Steuerleitungen (6, 7) angeordnet sind,
**dadurch gekennzeichnet, dass** jede der Kopplungsflächen (10) einen entsprechenden Sitz (14) für die Aufnahme der Dichtungsmittel aufweist,
wobei die Sitze (14), die auf den einander zugewandten Kopplungsflächen (10) von zwei der benachbarten Module (2) definiert sind, im Wesentlichen aufeinander ausgerichtet sind.

2. Verteiler (1) nach Anspruch 1, **dadurch gekennzeichnet, dass** die Ventilmittel (8) herausnehmbar in den Körper (3) des entsprechenden Moduls (2) eingesetzt sind.

3. Verteiler (1) nach einem oder mehreren der vorhergehenden Ansprüche, **dadurch gekennzeichnet, dass** die Ventilmittel (8) zwischen der Einlassöffnung (4a, 5a) und der Auslassöffnung (4b, 5b) des Zufuhrkanals (4) und/oder des Auslasskanals (5) eines jeden der Module (2) angeordnet sind.

4. Verteiler (1) nach einem oder mehreren der vorhergehenden Ansprüche, **dadurch gekennzeichnet, dass** das Gewindeelement (12) mindestens ein mit einem Außengewinde versehenes Ende (12a) und mindestens einen mit einem Innengewinde versehenen hohlen Kopf (12b) aufweist, wobei das Ende (12a) des Gewindeelements (12) eines der Module (2) in den hohlen Kopf (12b) des Gewindeelements (12) des benachbarten Moduls (2) eingreift.

5. Verteiler (1) nach einem oder mehreren der vorhergehenden Ansprüche, **dadurch gekennzeichnet, dass** er eine Vielzahl der Gewindeelemente (12) für jedes der Module (2) umfasst.

6. Verteiler (1) nach Anspruch 5, **dadurch gekennzeichnet, dass** er drei Gewindeelemente (12) für jedes der Module (2) umfasst, die so angeordnet sind, dass sie die Spitzen eines Dreiecks bilden.

7. Verteiler (1) nach einem oder mehreren der vorhergehenden Ansprüche, **dadurch gekennzeichnet, dass** das Loch (13) auf die Verbindungsflächen (10) gerichtet ist.

8. Verteiler (1) nach einem oder mehreren der vorhergehenden Ansprüche, **dadurch gekennzeichnet, dass** das Loch (13) mindestens eine Aussparung (13a) aufweist, um den Kopf des Gewindeelements (12) zumindest teilweise aufzunehmen.

9. Verteiler (1) nach Anspruch 8, **dadurch gekennzeichnet, dass** das Loch (13) mindestens eine erste Aussparung (13a) zur Aufnahme des Kopfes (12b) des entsprechenden Gewindeelements (12) und mindestens eine zweite Aussparung (13b), die der ersten Aussparung (13a) gegenüberliegt, zur Aufnahme des Kopfes (12b) des Gewindeelements (12) des benachbarten Moduls (2) umfasst.

10. Verteiler (1) nach einem oder mehreren der Ansprüche 4 bis 9, **dadurch gekennzeichnet, dass** das Gewindeelement (12) mindestens einen Schaft (12c) umfasst, der zwischen dem Ende (12a) und dem Kopf (12b) angeordnet ist, wobei der Kopf (12b), der Schaft (12c) und das Ende (12a) unterschiedliche Durchmesser aufweisen.

## Revendications

1. - Distributeur hydraulique (1) comprenant :
- une pluralité de modules (2) reliés les uns aux autres d'une manière amovible, chacun desdits modules (2) comprenant un corps relatif (3) comportant : au moins un canal d'alimentation (4) apte à être relié à une source d'alimentation d'un fluide de travail sous pression, au moins un canal d'évacuation (5) apte à être relié à un réservoir d'évacuation, au moins des première et seconde lignes de commande (6, 7) aptes à être reliées à un point d'utilisateur relatif (C), des moyens de vanne (8) actionnables pour réguler l'écoulement du fluide de travail vers lesdites lignes de commande (6, 7), des moyens d'activation (9) pour activer lesdits moyens de vanne (8), le corps (3) de chacun desdits modules (2) définissant deux surfaces de couplage (10) opposées l'une à l'autre, chacune d'elles étant agencée pour s'appuyer contre une surface de couplage (10) d'un module adjacent (2), ledit canal d'alimentation (4) et ledit canal d'évacuation (5) faisant chacun face auxdites surfaces de couplage (10) et définissant un orifice d'entrée relatif (4a, 5a) et un orifice de sortie relatif (4b, 5b) du fluide de travail, lesdits orifices d'entrée (4a, 5a) étant disposés face aux orifices de sortie relatifs (4b, 5b) et faisant face aux surfaces de couplage relatives (10) ;
- des moyens d'étanchéité positionnés entre les surfaces de couplage (10) de deux desdits modules (2) adjacents l'un à l'autre, au niveau desdits canaux d'alimentation et d'évacuation (4, 5), sur au moins une des surfaces de couplage (10) de deux modules (2) adjacents l'un à l'autre étant défini un siège relatif (14) pour la réception desdits moyens d'étanchéité, ledit siège (14) étant disposé autour desdits orifices d'entrée (4a, 5a) et/ou desdits orifices de sortie (4b, 5b) ;
- des moyens de raccordement mutuel (11) desdits modules (2) qui comprennent, pour chacun desdits modules (2), au moins un élément fileté (12) qui s'engage d'une manière amovible avec les éléments filetés (12) des modules adjacents (2) pour leur fixation mutuelle, ledit au moins un élément fileté (12) étant introduit dans un trou traversant relatif (13) défini sur le corps (3) du module relatif (2) et ledit trou (13) étant séparé dudit canal d'alimentation (4) et dudit canal d'évacuation (5), et lesdits éléments filetés étant séparés desdits canaux d'alimentation et d'évacuation (4, 5) ;
lesdits moyens de vanne (8) étant contenus à l'intérieur du corps relatif (3) de chacun desdits modules (2) et étant positionnés entre lesdits canaux d'alimentation et d'évacuation (4, 5) et lesdites lignes de commande (6, 7) ;
**caractérisé par le fait que** chacune desdites surfaces de couplage (10) a un siège relatif (14) pour la réception desdits moyens d'étanchéité, les sièges (14) définis sur les surfaces de couplage (10), se faisant mutuellement face, de deux desdits modules adjacents (2) étant sensiblement alignés l'un avec l'autre.

2. - Distributeur (1) selon la revendication 1, **caractérisé par le fait que** lesdits moyens de vanne (8) sont introduits d'une manière amovible à l'intérieur dudit corps (3) du module relatif (2).

3. - Distributeur (1) selon une ou plusieurs des revendications précédentes, **caractérisé par le fait que** lesdits moyens de vanne (8) sont positionnés entre l'orifice d'entrée (4a, 5a) et l'orifice de sortie (4b, 5b) d'au moins un du canal d'alimentation (4) et du canal d'évacuation (5) de chacun desdits modules (2).

4. - Distributeur (1) selon une ou plusieurs des revendications précédentes, **caractérisé par le fait que** ledit élément fileté (12) a au moins une extrémité filetée extérieurement (l2a) et au moins une tête creuse filetée intérieurement (l2b), l'extrémité (l2a) de l'élément fileté (12) d'un desdits modules (2) s'engageant avec la tête creuse (l2b) de l'élément fileté (12) du module adjacent (2) .

5. - Distributeur (1) selon une ou plusieurs des revendications précédentes, **caractérisé par le fait qu'**il comprend une pluralité desdits éléments filetés (12) pour chacun desdits modules (2).

6. - Distributeur (1) selon la revendication 5, **caractérisé par le fait qu'**il comprend trois desdits éléments filetés (12) pour chacun desdits modules (2) qui sont agencés pour définir les sommets d'un triangle.

7. - Distributeur (1) selon une ou plusieurs des revendications précédentes, **caractérisé par le fait que** ledit trou (13) fait face auxdites surfaces de couplage (10) .

8. - Distributeur (1) selon une ou plusieurs des revendications précédentes, **caractérisé par le fait que** ledit trou (13) comprend au moins un évidement (l3a) pour recevoir au moins partiellement la tête dudit élément fileté (12).

9. - Distributeur (1) selon la revendication 8, **caractérisé par le fait que** ledit trou (13) comprend au moins un premier évidement (l3a) pour la réception de la tête (l2b) de l'élément fileté relatif (12) et au moins un second évidement (l3b), qui est opposé audit premier évidement (13a), pour la réception de la tête (l2b) de l'élément fileté (12) du module adjacent (2).

10. - Distributeur (1) selon une ou plusieurs des revendications 4 à 9, **caractérisé par le fait que** ledit élément fileté (12) comprend au moins une tige (l2c), positionnée entre ladite extrémité (12a) et ladite tête (12b), ladite tête (12b), ladite tige (l2c) et ladite extrémité (12a) ayant des diamètres différents les uns des autres.
